# EUROPÄISCHE PATENTSCHRIFT

(11) **EP 1 698 786 B1**
(45) Veröffentlichungstag und Bekanntmachung des Hinweises auf die Patenterteilung: **18.06.2008**
(21) Anmeldenummer: 06003867.6
(22) Anmeldetag: 25.02.2006
(51) Int. Cl.: F16C 1/12, B60R 25/00, G05G 5/28

(54) **Bowdenzuganordnung und Kupplungselement zum Verbinden zweier Bowdenzüge**
Control cable assembly and coupling element to connect two Bowden cables
Ensemble de commande Bowden et élément d'accouplement reliant deux cables Bowden

(30) Priorität: 04.03.2005 DE 102005009930
(43) Veröffentlichungstag der Anmeldung: 06.09.2006
(73) Patentinhaber: AUDI AG, 85045 Ingolstadt (DE)
(72) Erfinder: Böhm, Günther, 85137 Walting (DE); Weiser, Markus, 85049 Ingolstadt (DE); Brucklacher, Josef, 85051 Ingolstadt (DE); Liepold, Thomas, 85080 Gaimersheim (DE); Drescher, Michael, 85125 Enkering (DE)
(74) Vertreter: Patzelt, Heike Anna Maria

(56) Entgegenhaltungen:
- EP-A- 0 757 147
- DE-A1- 4 222 093
- FR-A1- 2 719 923
- GB-A- 765 877

## Beschreibung

Bowdenzüge sind ein Kraftübertragungsmittel, das zur Übertragung einer Stellkraft von einem Betätigungselement auf einen Steller dient. Als Betätigungselement werden dabei bevorzugt Stellglieder oder Bedienhebel verwendet, die fern vom Steller angeordnet sind. Der Bowdenzug weist dabei zum einen eine Seele und zum anderen einen die Seele ummantelnden Mantel auf. Die Übertragung der Stellkraft erfolgt im Bowdenzug linear, wobei beim Betätigen des Bedienelements die Seele in einer Kraftrichtung beaufschlagt wird und die Seele im Mantel gegenüber diesem verschoben wird. Im Mantel wirkt dabei eine der Zugkraft auf die Seele entgegenwirkende Stützkraft. Im Steller wird aufgrund der Verschiebung von Seele zu Mantel dann eine Schaltfunktion ausgeübt. Eine typische Art von Steller sind dabei Schlösser und Schlosseinrichtungen, die das Schloss öffnen.

Derartige Bowdenzüge werden in vielfältiger Form verwendet. Ein besonderes Anwendungsgebiet derartiger Bowdenzüge und Bowdenzuganordnungen liegt im Bereich des Fahrzeugbaus, wo sie beispielsweise dem Öffnen der Verschlüsse von Heckklappen, Tankklappen und Motorhauben dienen.

Es ist dabei bekannt, bei Bowdenzuganordnungen mehrere Bowdenzüge zu verwenden, die mittels eines Kupplungselements miteinander verbunden werden, so dass bei einer Betätigung des Bedienelements die Krafteinleitung in Seele und Mantel durch das Kupplungselement jeweils auf den nächsten Bowdenzug übertragen werden. Die Unterteilung des Bowdenzugs in mehrere einzelne Bowdenzüge und das Verbinden über Kupplungselemente dient beispielsweise der besseren Montage und Verlegung von Bowdenzügen bei der Bowdenzuganordnung, beispielsweise der besseren Durchführung der Bowdenzüge durch Wanddurchbrüche im Fahrzeug, wie dies beispielsweise die Spritzwand zwischen Fahrzeuginnenraum und Motorraum darstellt.

Ein Nachteil solcher Bowdenzuganordnungen ist darin zu sehen, dass dann, wenn ein externer Zug auf die Bowdenzuganordnung möglich ist, auf den Mantel durch Ziehen quer in der Erstreckungsrichtung des Bowdenzugs eine Kraft eingeleitet werden kann. Diese Krafteinleitung führt zu einer Kraftübertragung in Mantel und Seele, die letztendlich zu einem Betätigen des Stellers führt. Durch diese Maßnahme kann insbesondere durch Umgehung der Betätigung oder beispielsweise des Eindringens in den Innenraum eines Fahrzeugs ein unbefugtes Betätigen des Stellers erfolgen.

Dafür ist es die Aufgabe der Erfindung, ein solches unberechtigtes Öffnen des Stellers durch Angriff von außen zu verhindern.

Die der Erfindung zugrunde liegende Aufgabe wird durch eine Bowdenzuganordnung gemäß dem Anspruch 1 gelöst, hierbei kann insbesondere ein Kupplungselement gemäß der Ansprüche 7 bis 12 Verwendung finden.

Eine erfindungsgemäße Bowdenzuganordnung weist einen ersten und einen zweiten Bowdenzug auf, wobei die Bowdenzüge mittels eines Kupplungselements miteinander verbunden sind. Gemäß der Erfindung ist dabei vorgesehen, dass das Kupplungselement die Verbindung zwischen den beiden Bowdenzügen trennt, wenn eine primäre gleichgerichtete Krafteinleitung auf einen Mantel eines der Bowdenzüge erfolgt.

Erfolgt bei einer solchen Bowdenzuganordnung eine Betätigung des zugehörigen Bedienelements, so erfolgt zunächst eine Krafteinleitung in die Seele in einer Kraftrichtung und den Mantel mit entgegengerichteter Kraftrichtung. Erfolgt eine Betätigung des Stellers, werden die Kräfte durch die Bowdenzüge vom Bedienelement zum Steller weitergeleitet. Erfolgt ein Angriff von außen, in dem ein Zug auf einen der Bowdenzüge ausgeübt wird, so ist die Krafteinleitung im Verlauf des Bowdenzuges so gestaltet, dass die übertragene Kraft in Mantel und Seele die gleiche Kraftrichtung aufweisen, nämlich beides Mal hin zum Zugpunkt des äußeren Angriffs am Bowdenzug gerichtet sind. Aufgrund dieser unterschiedlichen Art der Krafteinleitung erfolgt eine Unterscheidung der Kraftweiterleitung und die eingeleitete Kraft in einem der Bowdenzüge führt dazu, dass das Kupplungselement die Verbindung zwischen den beiden Bowdenzügen der Bowdenzuganordnung öffnet und somit ein Betätigen des Stellers durch den äußeren Angriff verhindert.

Gemäß vorteilhafter Ausgestaltung der Erfindung ist vorgesehen, dass die Seelen der beiden Bowdenzüge so miteinander verbunden sind, dass bei Krafteinleitung auf einer der beiden Seelen im Kupplungselement eine verbindungslösende Querkraftkomponente erzeugt wird. Das Kupplungselement weist dabei vorzugsweise eine Sperre auf, die freigegeben wird, wenn die auf den Mantel einwirkende Kraft zu der auf die Seele einwirkende Kraft gleichgerichtet ist. Gibt die Sperre frei, so löst sich die Verbindung zwischen den beiden Bowdenzügen aufgrund der zwischen den Seelen erzeugten Querkraftkomponente. Bleibt die Sperre geschlossen, weil die auf den Mantel einwirkende Kraft zu der auf die Seele einwirkende Kraft entgegengerichtet ist, so sorgt die Sperre dafür, dass die Verbindung zwischen den beiden Bowdenzügen im Kupplungselement aufrecht erhalten bleibt und die Kraftübertragung erfolgt.

Gemäß bevorzugter Ausgestaltung der Erfindung ist vorgesehen, dass das Kupplungselement zwei Bowdenzüge der Bowdenzuganordnung in einem Bereich verbindet, in dem ein Angriff von außen, nämlich ein Zug auf den Mantel quer zur Erstreckungsrichtung eines der Bowdenzüge zu erwarten ist. Je näher das Kupplungselement in dem Bereich angeordnet ist, in dem der Angriff erfolgt, desto schneller führt die Einleitung der Schwerkraft dazu, dass die Kraft ausreicht, um die Sperre zu lösen und die Verbindung zwischen den beiden Bowdenzügen im Kupplungselement zu trennen. In der Regel sind die Bereiche, in denen ein Angriff von außen auf einen Bowdenzug erfolgen kann bekannt, da die Bowdenzüge über große Strecken ihres Verlaufes in geschlossenen oder gekapselten Bereichen untergebracht sind und nur wenige Stellen zum Angriff von außen zugänglich sind. Bei einem Teil oder bei allen offenen Stellen einer Bowdenzuganordnung kann ein Kupplungselement vorgesehen sein, das gemäß der Erfindung ausgebildet ist.

Es entspricht einer bevorzugten Verwendung einer erfindungsgemäßen Bowdenzuganordnung, wenn diese in Fahrzeugen Verwendung findet und der Freigabe bzw. dem Öffnen außen liegender Klappen der Karosserie dient. Beispielsweise kann mittels einer erfindungsgemäßen Bowdenzuganordnung die Tankklappe freigegeben oder geöffnet werden, eine Heckklappe oder Motorhaube freigegeben oder geöffnet werden. Es kann auch eine Verwendung zum Freigeben bzw. Öffnen von Türen vorgesehen sein. Prinzipiell kann die Erfindung für alle Vorrichtungen in einem Kraftfahrzeug vorgesehen sein, welche mittels Bowdenzügen freigegeben bzw. geöffnet werden können.

Ein Kupplungselement zum Verbinden zweier Bowdenzüge, wie es besonders zur Verwendung in einer erfindungsgemäßen Bowdenzuganordnung geeignet ist, verbindet dabei jeweils zwei Bowdenzüge, die Mantel und Seele aufweisen. Dabei ist vorgesehen, dass die Seele des ersten Bowdenzuges mit einer Nippelkammer verbunden ist und an der Seele des zweiten Bowdenzuges ein Kupplungsnippel vorgesehen ist. Der Kupplungsnippel wird dabei in der Nippelkammer so gehalten, dass eine Kraft zwischen den Seelen übertragbar ist. Gemäß der Erfindung ist vorgesehen, dass die Nippelkammer so gestaltet ist, dass bei einer Übertragung einer Kraft von einer Seele auf die andere Seele eine Querkraft erzeugt wird, die den Nippel auf eine Sperre hin beaufschlagt.

Nippelkammern werden üblicherweise so gestaltet, dass der darin gehaltene Nippel umschlossen ist, um möglichst geringes Bewegungsspiel aufzuweisen. Im Gegensatz zu dieser üblichen Ausgestaltung einer Nippelkammer ist eine erfindungsgemäß ausgebildete Nippelkammer so gestaltet, dass eine den Nippel auswerfende Querkraftkomponente erzeugt wird, welche dazu verwendet werden kann eine Sperre zu öffnen, sobald diese freigegeben wird und letztendlich dafür sorgt, dass die Verbindung zwischen den beiden Bowdenzügen im Kupplungselement gelöst werden kann.

Hierzu ist in vorteilhafter Ausgestaltung insbesondere vorgesehen, dass die Nippelkammer in einem Gehäuse längst verschiebbar angeordnet ist. Das Gehäuse ist dabei vorzugsweise durch einen Deckel verschlossen, welcher gleichzeitig als Sperre dient. Es entspricht dabei vorteilhafter weiterführender Ausgestaltung, wenn der Deckel schwenkbar am Gehäuse gelagert ist und geeignet ist, durch die Schwenkbewegung einen Auswurf des Nippels aus der Nippelkammer zu ermöglichen. Der Deckel ist gemäß bevorzugter Ausgestaltung so ausgebildet, dass er wenigstens eine Gehäusewand überdeckt und im Überlappungsbereich ein endständiger Schlitz ausgebildet ist. Der Schlitz ist dabei vorzugsweise in der Gehäusewand als auch im Überlappungsbereich ausgebildet und erstreckt sich bei einer gewissen Länge hinweg in Richtung der Verbindung der beiden Bowdenzüge im Kupplungselement. Die Schlitze werden dabei nach dem Verbinden der beiden Bowdenzüge im Kupplungselement von einer mit dem Mantel des zweiten Bowdenzugs verbundenen Sperrnase durchsetzt. Durch diese Sperrnase ist der Deckel gegen Öffnen gesichert am Gehäuse gehalten. Wird eine gleichgerichtete Kraft auf Mantel und Seele eines der Bowdenzüge ausgeübt, so wirkt die zwischen den beiden Bowdenzügen wirkende Zugkraft dahingehend, dass die Sperrnase aus den Schlitzen herausgezogen wird. Nun ist der Deckel nicht mehr gesichert gehalten und kann durch den Nippel, der aus der Nippelkammer herausgedrückt wird, aufgrund der Schwerkraft, welche erzeugt wurde, geöffnet werden. Damit löst sich die Verbindung zwischen den beiden Bowdenzügen im Kupplungselement.

Es entspricht einer bevorzugten Ausgestaltung der Erfindung, wenn zwischen dem Gehäuse und der Nippelkammer eine Rückstellfeder vorgesehen ist, die die Nippelkammer im Sinne des Erzeugens einer definierten Ausgangsstellung beaufschlagt. Durch diese Feder wird zum einen eine Mindestdifferenzkraft zwischen den beiden Kräften auf Mantel und Seele benötigt, um zu einer Betätigung des Kupplungselements zu führen, welche vorzugsweise so bestimmt und gewählt wird, dass bei einer Fehlbetätigung ein sicheres Herausziehen der Sperrnase aus den Schlitzen sichergestellt ist und zum anderen ein unbeabsichtigtes oder unvorhergesehenes Betätigen des Bowdenzuges nicht auftritt. Bevorzugte Ausgestaltungen der Nippelkammer sehen vor, dass diese eine Schrägfläche aufweist, die bei Kraftübertragung den Nippel im Sinne eines Auswerfens des Kupplungsnippels aus der Nippelkammer hin auf den Deckel beaufschlagt.

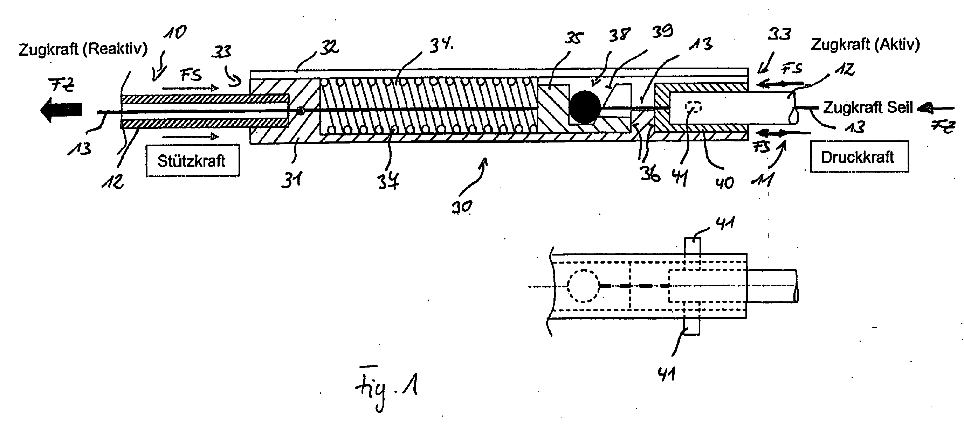

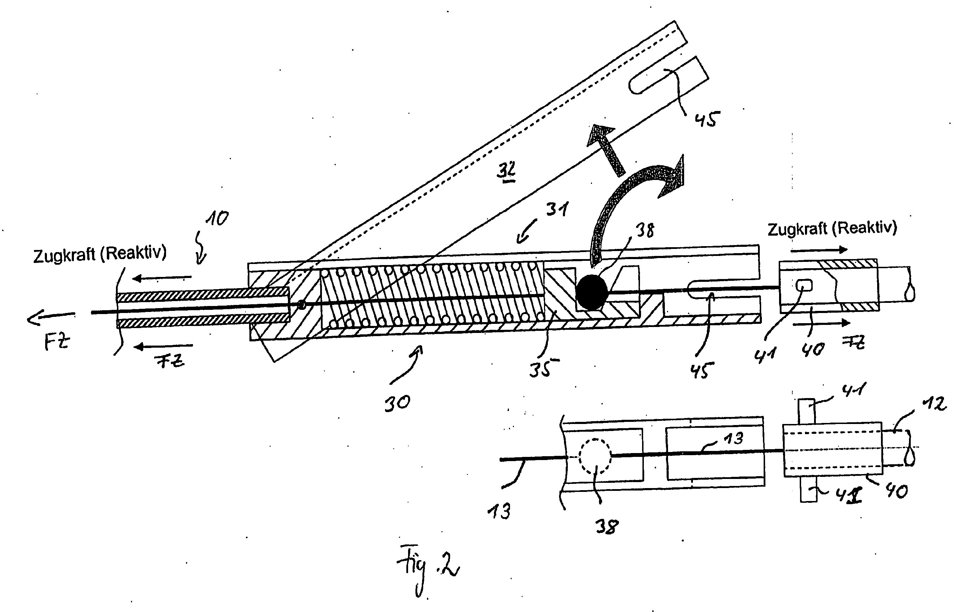

Im übrigen ist die Erfindung nachfolgend anhand der in den Figuren 1 und 2 dargestellten Zeichnung näher erläutert. Dabei zeigt:
- Fig.1: Ein Ausschnitt aus einer Bowdenzuganordnung im Bereich eines Kupplungselements bei hergestellter Verbindung und
- Fig.2: das Kupplungselement bei unbefugtem Angriff von außen und einem Lösen der Verbindung.

Die Figuren 1 und 2 zeigen jeweils in dem Bereich eines Kupplungselements einen Ausschnitt aus einer Bowdenzuganordnung. Dabei ist in jeder der Figuren als teilweiser Längsschnitt der erste und zweite Bowdenzug sowie das Kupplungselement dargestellt, während ein Ausschnitt darunter als Aufsichtsdarstellung gezeigt ist.

Die beiden Figuren zeigen den ersten Bowdenzug 10 und den zweiten Bowdenzug 11, jeweils einen Mantel 12 und eine Seele 13 auf. Die beiden Bowdenzüge sind mittels dem Kupplungselement 30 miteinander verbunden. Das Kupplungselement 30 wird dabei jeweils aus einem Gehäuse 31 und einem Deckel 32, welcher das Gehäuse 31 abschließt, gebildet. Dabei sind Gehäuse 31 und Deckel 32 von ihrer Grundform jeweils u-förmig ausgebildet. Darüber hinaus weist das Gehäuse 31 an beiden axialen Enden Durchführungen 33 für jeweils einen Bowdenzug 10 bzw. 11 auf. Dabei ist jeweils der Mantel 12 im Gehäuse 31 in axialer Richtung abgestützt, während die Seele 11 jeweils in eine Kammer 34 des Gehäuses 31 hineingeführt ist.

In der Kammer 34 ist die Nippelkammer 35 axial verschiebbar angeordnet. Die Nippelkammer 35 ist dabei lösbar oder fest mit der Seele 13 des ersten Bowdenzugs 10 verbunden. Dabei ist die Nippelkammer 35 in Richtung auf einen Endanschlag 36 durch eine Rückstellfeder 37 beaufschlagt.

In der Nippelkammer 35 ist der Nippel 38, welcher mit der Seele 13 des zweiten Bowdenzuges 11 fest oder lösbar verbunden ist, gehalten. Dabei ist in der Nippelkammer 35 die Schrägfläche 39 ausgebildet, welche beim Einleiten einer Zugkraft in eine der Seelen 13 den Nippel 38 in Richtung auf den Deckel 32 hin beaufschlagt, so dass bei einer Betätigung eine Öffnungskraft auf den Deckel 32 einwirkt.

Der Mantel 12 des zweiten Bowdenzuges ist inständig von einer Hülse 40 umgeben, welche seitlich abragende Sperrnasen 41 aufweist. Dabei ist die Hülse 40 im Inneren des Gehäuses 31 axial durch den Endanschlag 36 gehalten und abgestützt. Die Hülse 40 ist dabei lose in das Gehäuse 31 eingesteckt und nicht mit dem Gehäuse 31 verbunden. Anstelle die Hülse 40 mit den Sperrnasen 41 auszubilden ist es auch möglich, dass die Sperrnasen direkt am Mantel 12 des zweiten Bowdenzugs 11 angeformt sind und nur der Mantel 12 in das Gehäuse 31 hineingesteckt ist. Dabei durchsetzen die Sperrnasen 41 im Gehäuse 31 und im Deckel 32 in ihren Überlappungsflächen ausgebildete endständige Schlitze.

Wird, wie in der Fig.1 gezeigt, im ersten Bowdenzug 10 über ein zugeordnetes Betätigungselement (nicht dargestellt), wie beispielsweise einem Betätigungshebel oder Zug auf die Seele 13 eine Zugkraft FZ eingeleitet, so wird im Mantel 12 eine der Zugkraft FZ entgegengerichtete Stützkraft FS erzeugt. Über die Abstützung des Mantels 12 des ersten Bowdenzugs 10 am Gehäuse 31 wird diese Stützkraft FS abgestützt. Die Zugkraft FZ auf der Seele 13 wird in die Nippelkammer 35 eingeleitet, welche dadurch axial im Gehäuse 31 entgegen der Wirkung der Rückstellfeder 37 verschoben wird. Durch das Verschieben der Nippelkammer 35 wird eine Zugkraft FZ am Nippel 38 eingeleitet, welcher entlang der Schrägfläche 39 nach oben gleitet und gegen den Deckel 32 drückt. Solange der Deckel 32 durch die Sperrnasen 41 in der Schließstellung gehalten wird, wird anschließend der Nippel 38 mit der Nippelkammer 35 mitbewegt und in der Seele 13 des zweiten Bowdenzugs 11 wiederum eine Zugkraft FZ erzeugt. Unter Abstützung des Mantels 12 des zweiten Bowdenzugs 11 am Gehäuse 32 wird eine Reaktionskraft, nämlich eine Stützkraft FS, welche der Zugkraft FZ entgegengesetzt ist, auch beim zweiten Bowdenzug 11 erzeugt. Somit findet eine Kraftübertragung vom ersten 10 auf den zweiten Bowdenzug 11 statt. Das Kupplungselement 30 bewerkstelligt somit eine Kopplung der beiden Bowdenzüge 10 und 11 miteinander und bewirkt eine Kraftdurchleitung.

Die Fig. 2 zeigt die Situation, wenn bei einem der beiden Bowdenzüge 10, 11 eine Querkraft eingeleitet wird, beispielsweise in dem extern eine Kraft auf eine der beiden Bowdenzüge 10, 11 ausgeübt wird. In diesem Fall ist die Zugkraft FZ, beispielsweise im ersten Bowdenzug 10 so, dass die Zugkraft FZ im Mantel 12 und in der Seele 13 gleichmäßig verteilt ist. Aufgrund der Tatsache, dass damit die Stützkraft FS durch den Mantel 12 fehlt, wird das Gehäuse 31 mit in Richtung der einwirkenden Zugkraft FZ mitbewegt. Der Nippel 41 an der Hülse 40 verlässt die Schlitze, welche in Deckel 32 und Gehäuse 31 angebracht sind, aufgrund der entstehenden Relativbewegung. Am Mantel 12 des zweiten Bowdenzugs 11 tritt in gleicher Weise aufgrund der Anlenkung des ersten Bowdenzugs 10 am Steller oder Bedienelement eine ebenfalls die Sperrnasen 41 aus den Schlitzen 45 heraus bewegende Zugkraft FZ auf. Durch das Herausbewegen der Sperrnasen 41 aus den Schlitzen 45 wird die Verriegelung des als Sperre dienenden Deckels 32 geöffnet. Wird nun weiterhin eine Zugkraft FZ ausgeübt, so wird in eine der beiden Seelen 13 auch eine Kraft eingeleitet. Diese Kraft wird dazu verwendet, dass der Nippel 38 entlang der Schrägfläche 39 in Richtung auf den Deckel 32 bewegt wird. Hierdurch wird der Deckel 32 seiner Schließstellung am Kupplungselement 30 herausbewegt und der Nippel 38 kann die Nippelkammer 35 verlassen, wobei die Bewegung des Deckels 32 und des Nippels 38 durch beide Pfeile zeichnerisch angedeutet sind. Hierdurch wird durch das Kupplungselement 30 die Verbindung zwischen den beiden Bowdenzüge 10, 11 der Bowdenzuganordnung selbsttätig gelöst.

## Patentansprüche

1. Bowdenzuganordnung, mit einem ersten (10) und einem zweiten Bowdenzug (11), wobei die Mäntel (12) und Seelen (13) der Bowdenzüge (10, 11) mittels eines Kupplungselements 30 verbunden sind,
**dadurch gekennzeichnet dass**
das Kupplungselement (30) als Sicherungseinrichtung gegen unbefugte Betätigung ausgebildet ist, die die Verbindung sowohl zwischen den Mänteln (12) als auch zwischen den Seelen (13) der Bowdenzüge (10, 11) selbsttätig trennt, wenn eine primäre gleichgerichtete Zugkrafteinleitung auf einen Mantel (12) eines der Bowdenzüge (10, 11) erfolgt.

2. Bowdenzuganordnung nach Anspruch 1,
**dadurch gekennzeichnet,dass**
das Kupplungselement (30) Seelen (13) und Mäntel (12) der Bowdenzüge (10, 11) lösbar miteinander verbindet und die Verbindung selbsttätig löst, wenn eine gleichgerichtete Krafteinleitung auf Mantel (12) und Seele (13) eines Bowdenzuges (10, 11) erfolgt, wobei eine Kraftdurchleitung von einem Bowdenzug (10, 11) auf den anderen Bowdenzug (10, 11) erfolgt, wenn eine einander entgegengerichtete Krafteinleitung auf Mantel (12) und Seele (13) erfolgt.

3. Bowdenzuganordnung nach Anspruch 1 oder 2,
**dadurch gekennzeichnet,dass**
die Seelen (13) der beiden Bowdenzüge (10, 11) so miteinander verbunden sind, dass bei Krafteinleitung auf eine der Seelen (13) im Kupplungselement (30) eine verbindungslösende Querkraftkomponente erzeugt wird, wobei ein Verbindungselement (31) des Kupplungselements (30) eine Sperre (32) aufweist, die selbsttätig freigegeben wird, wenn die Kraft auf den Mantel (12) zur Kraft auf die Seele (13) gleichgerichtet ist.

4. Bowdenzuganordnung nach einem der vorhergehenden Ansprüche,
**dadurch gekennzeichnet,dass**
die Bowdenzuganordnung ein Bedienelement mit einem Funktionselement verbindet, wobei bei Betätigen des Bedienelements eine Kraft eingeleitet wird, die vom Mantel (12) und Seele (13) übertragen wird, wobei die Kraftrichtungen einander entgegengerichtet sind.

5. Bowdenzuganordnung nach einem der vorhergehenden Ansprüche,
**dadurch gekennzeichnet,dass**
das Kupplungselement (30) in einem Bereich angeordnet ist, in dem ein Zug auf den Mantel (12) quer zur Erstreckungsrichtung eines der Bowdenzüge (10,11) zu erwarten ist.

6. Bowdenzuganordnung nach einem der vorhergehenden Ansprüche,
**dadurch gekennzeichnet,dass**
die Anordnung in einem Fahrzeug angeordnet ist und vorzugsweise der Freigabe von außenliegenden Klappen der Karosserie dient.

7. Kupplungselement zum Verbinden zweier Bowdenzüge (10, 11), insbesondere zur Verwendung in einer Bowdenzuganordnung nach einem der vorhergehenden Ansprüche, wobei
- die Bowdenzüge (10, 11) jeweils einen Mantel (12) und eine Seele (13) aufweisen,
- die Seele (13) des ersten Bowdenzugs (10) mit einer Nippelkammer (35) des Kupplungselements (30) verbunden ist und an der Seele (13) des zweiten Bowdenzugs (11) ein Kupplungsnippel (38) vorgesehen ist, welches in der Nippelkammer (35) so gehalten ist, dass eine Kraft zwischen den Seelen (13) übertragbar ist,
**dadurch gekennzeichnet,dass**
- die Nippelkammer (35) so gestaltet ist, dass bei der Übertragung einer Kraft von der ersten (13) auf die zweite Seele (13) eine Querkraft erzeugt wird, die den Nippel (38) auf eine Sperre beaufschlagt.

8. Kupplungselement nach Anspruch 7,
**dadurch gekennzeichnet, dass** das Kupplungselement (30) ein Gehäuse (31) aufweist, innerhalb dessen die Nippelkammer (35) längsverschiebbar angeordnet ist.

9. Kupplungselement nach Anspruch 8,
**dadurch gekennzeichnet,dass**
das Gehäuse (31) durch einen Deckel (32) verschlossen ist, welcher als Sperre dient.

10. Kupplungselement nach Anspruch 9,
**dadurch gekennzeichnet,dass**
der Deckel (32) nach oben schwenkbar am Gehäuse (31) gelagert ist und wenigstens eine Gehäusewand überdeckt, wobei im Überlappungsbereich ein endständiger Schlitz ausgebildet ist, in den eine mit dem Mantel (12) des zweiten Bowdenzugs (11) verbundene Sperrnase (41) einführbar ist.

11. Kupplungselement nach einem der Ansprüche 7 bis 10,
**dadurch gekennzeichnet,dass**
zwischen dem Gehäuse (31) und der Nippelkammer (35) eine Rückstellfeder (37) ausgebildet ist, die die Nippelkammer (35) im Sinne des Erzeugens einer definierten Ausgangsstellung beaufschlagt.

12. Kupplungselement nach einem der Ansprüche 7 bis 11,
**dadurch gekennzeichnet,dass**
die Nippelkammer (35) eine Schrägfläche (39) aufweist, die bei Kraftübertragung den Nippel (38) im Sinne eines Auswerfens des Nippels (38) aus der Nippelkammer (35) beaufschlagt.

## Claims

1. Bowden cable assembly comprising a first Bowden cable (10) and a second Bowden cable (11), the sheaths (12) and cores (13) of the Bowden cables (10, 11) being joined together by means of a coupling element (30),
**characterized in that**
the coupling element (30) is designed as a safety device against unauthorized operation and automatically releases the connection both between the sheaths (12) and the cores (13) of the Bowden cables (10, 11) when a primary tensile force acting unidirectionally is applied to a sheath (12) of one of the Bowden cables (10, 11).

2. Bowden cable assembly according to Claim 1,
**characterized in that**
the coupling element (30) detachably connects cores (13) and sheaths (12) of the Bowden cables (10, 11) and automatically releases the connection when a force acting unidirectionally is applied to sheath (12) and core (13) of a Bowden cable (10, 11), whereas a force passes through from one Bowden cable (10, 11) to the other Bowden cable (10, 11) when a force acting in opposite directions is applied to sheath (12) and core (13).

3. Bowden cable assembly according to Claim 1 or 2,
**characterized in that**
the cores (13) of the two Bowden cables (10, 11) are joined together in such a way that when a force is applied to one of the cores (13) a connection-releasing transverse force component is generated in the coupling element (30), and a connecting element (31) of the coupling element (30) has a locking device (32) which is automatically released when the force on the sheath (12) acts in the same direction as the force on the core (13).

4. Bowden cable assembly according to one of the preceding claims,
**characterized in that**
the Bowden cable assembly connects a control element to a function element and upon operation of the control element a force is applied which is transmitted by the sheath (12) and core (13), in which case the forces act in opposite directions.

5. Bowden cable assembly according to one of the preceding claims,
**characterized in that**
the coupling element (30) is located in an area where a pull on the sheath (12) perpendicular to the direction of extension of one of the Bowden cables (10, 11) is to be expected.

6. Bowden cable assembly according to one of the preceding claims,
**characterized in that**
the assembly is provided in a vehicle and preferably serves to release flaps located on the outside of the bodywork.

7. Coupling element for connecting two Bowden cables (10, 11), particularly for use in a Bowden cable assembly according to one of the preceding claims, in which
- the Bowden cables (10, 11) each have a sheath (12) and a core (13),
- the core (13) of the first Bowden cable (10) is connected to a nipple chamber (35) of the coupling element (30), and the core (13) of the second Bowden cable (11) is provided with a coupling nipple (38) which is retained in the nipple chamber (35) in such a way that a force is transmittable between the cores (13),
**characterized in that**
- the nipple chamber (35) is formed in such a way that, when a force is transmitted from the first core (13) to the second core (13), a transverse force is generated which forces the nipple (38) against a locking device.

8. Coupling element according to Claim 7,
**characterized in that**
the coupling element (30) has a housing (31), inside which the nipple chamber (35) is disposed in such a way as to be longitudinally displaceable.

9. Coupling element according to Claim 8,
**characterized in that**
the housing (31) is closed by a cover (32) which serves as a locking device.

10. Coupling element according to Claim 9,
**characterized in that**
the cover (32) is mounted on the housing (31) so as to swivel upwards and covers at least one wall of the housing, an end slot being formed in the overlapping area, into which slot a locking lug (41) connected to the sheath (12) of the second Bowden cable (11) can be inserted.

11. Coupling element according to one of Claims 7 to 10,
**characterized in that**
disposed between the housing (31) and the nipple chamber (35) is a return spring (37) which acts on the nipple chamber (35) for the purpose of producing a precise starting position.

12. Coupling element according to one of Claims 7 to 11,
**characterized in that**
the nipple chamber (35) has an inclined surface (39) which, when a force is transmitted, acts on the nipple (38) for the purpose of ejecting said nipple (38) from the nipple chamber (35).

## Revendications

1. Ensemble de câbles Bowden comportant un premier câble Bowden (10) et un second câble Bowden (11), les gaines (12) et les âmes (13) des câbles Bowden (10, 11) étant reliées au moyen d'un élément d'accouplement (30),
**caractérisé en ce que**
l'élément d'accouplement (30) est réalisé sous forme d'un dispositif de protection contre tout actionnement non autorisé qui sépare automatiquement la liaison aussi bien entre les gaines (12) qu'également entre les âmes (13) des câbles Bowden (10, 11), lorsqu'une amorce d'effort de traction dirigée dans la même direction est effectuée sur une gaine (12) d'un des câbles Bowden (10, 11).

2. Ensemble de câbles Bowden selon la revendication 1,
**caractérisé en ce que**
l'élément d'accouplement (30) relie de manière détachable des âmes (13) et des gaines (12) des câbles Bowden (10, 11) et détache automatiquement la liaison si une amorce de force dirigée dans la même direction est effectuée sur la gaine (12) et l'âme (13) d'un câble Bowden (10, 11), un passage de force ayant lieu d'un câble Bowden (10, 11) à l'autre (10, 11) si une amorce de force dirigée dans le sens inverse est effectuée sur la gaine (12) et l'âme (13).

3. Ensemble de câbles Bowden selon la revendication 1 ou 2,
**caractérisé en ce que**
les âmes (13) des deux câbles Bowden (10, 11) sont reliées entre elles de sorte que lors de l'amorce de force sur l'une des âmes (13) dans l'élément d'accouplement (30), une composante de force transversale desserrant la liaison soit générée, un élément de liaison (31) de l'élément d'accouplement (30) présentant un mécanisme de verrouillage (32) qui est libéré automatiquement si la force est dirigée dans la même direction sur la gaine (12) que la force sur l'âme (13) .

4. Ensemble de câbles Bowden selon l'une quelconque des revendications précédentes,
**caractérisé en ce**
**qu'**il relie un élément de commande à un élément fonctionnel, grâce à quoi lors de l'actionnement de l'élément de commande, une force est amorcée, laquelle est transmise par la gaine (12) et l'âme (13), les directions de force étant dirigées à l'inverse les unes des autres.

5. Ensemble de câbles Bowden selon l'une quelconque des revendications précédentes,
**caractérisé en ce que** l'élément d'accouplement (30) est disposé dans une zone, dans laquelle un câble doit être attendu sur la gaine (12) transversalement à la direction de développement d'un des câbles Bowden (10, 11).

6. Ensemble de câbles Bowden selon l'une quelconque des revendications précédentes,
**caractérisé en ce que** l'ensemble est disposé dans un véhicule et sert de préférence à libérer les clapets extérieurs de la carrosserie.

7. Élément d'accouplement pour la liaison de deux câbles Bowden (10, 11), notamment pour l'utilisation dans un ensemble de câbles Bowden selon l'une quelconque des revendications précédentes,
- les câbles Bowden (10, 11) présentant respectivement une gaine (12) et une âme (13),
- l'âme (13) du premier câble Bowden (10) étant reliée à une chambre pour téton (35) de l'élément d'accouplement (30) et un téton d'accouplement (38) étant prévu sur l'âme (13) du second câble Bowden (11), lequel est maintenu dans la chambre pour téton (35) de telle sorte qu'une force puisse être transférée entre les âmes (13),
**caractérisé en ce que**
- la chambre à raccord fileté (35) est conçue de telle sorte que lors du transfert d'une force de la première âme (13) à la seconde (13), une force transversale soit générée, laquelle sollicite le raccord fileté (38) sur un mécanisme de verrouillage.

8. Élément d'accouplement selon la revendication 7,
**caractérisé en ce que**
l'élément d'accouplement (30) présente un boîtier (31), au sein duquel la chambre pour téton (35) est disposée déplaçable longitudinalement.

9. Élément d'accouplement selon la revendication 8,
**caractérisé en ce que**
le boîtier (31) est fermé par un couvercle (32) qui sert de mécanisme de verrouillage.

10. Élément d'accouplement selon la revendication 9,
**caractérisé en ce que**
le couvercle (32) est logé de manière à pivoter vers le haut sur le boîtier (31) et recouvre au moins une paroi de boîtier, une fente terminale étant réalisée dans la zone de chevauchement, dans laquelle fente un ergot de verrouillage (41) relié à la gaine (12) du second câble Bowden (11) peut être introduit.

11. Élément d'accouplement selon l'une quelconque des revendications 7 à 10,
**caractérisé en ce**
**qu'**entre le boîtier (31) et la chambre à raccord fileté (35) est formé un ressort de rappel (37) qui sollicite la chambre pour téton (35) au sens de la génération d'une position de départ définie.

12. Élément d'accouplement selon l'une quelconque des revendications 7 à 11,
**caractérisé en ce que**
la chambre pour téton (35) présente une face oblique (39) qui sollicite lors du transfert de force le téton (38) au sens de son éjection de la chambre pour téton (35).
